# EUROPEAN PATENT SPECIFICATION

(11) **EP 3 369 973 B1**
(45) Date of publication and mention of the grant of the patent: **11.12.2019**
(21) Application number: 18155961.8
(22) Date of filing: 09.02.2018
(51) Int. Cl.: F16K 5/04, F16K 5/18, F16K 11/085

(54) **REGULATING VALVE**
REGELVENTIL
SOUPAPE DE RÉGULATION

(30) Priority: 03.03.2017 SE 1750235
(43) Date of publication of application: 05.09.2018
(73) Proprietor: LK Armatur AB, 254 66 Helsingborg (SE)
(72) Inventor: BENCELL, Laszlo, 265 38 Åstorp (SE)
(74) Representative: AWA Sweden AB

(56) References cited:
- CN-C- 100 545 492
- CN-Y- 2 436 736
- US-A- 1 361 126
- US-A1- 2006 016 491

## Description

### FIELD OF THE INVENTION

The present invention relates to a regulating valve for controlling fluid communication between at least two ports.

### BACKGROUND OF THE INVENTION

A regulating valve for the control of a fluid flow typically comprises an internally hollow housing having ports for providing inlet and outlet of fluid. The housing has an opening to each port and the cross-sectional area of the opening, and hence the fluid flow to or from the port, is regulated by an obturator which is arranged in the hollow housing.

To allow rotation of the obturator there is a radial gap between the inner wall of the housing and the outer circumferential wall of the obturator. This gap will cause an inevitable leakage between the ports.

To reduce the leakage it is well known to arrange a flexible sealing in the interface between the inner wall of the housing and the obturator. The sealing may e.g. be arranged in the inner wall of the housing surrounding the opening or in the obturator. To fill the gap and to create a proper sealing, the sealing is slightly compressed. Such sealing will however due to its inherent flexibility be subjected to a shearing force when the obturator is rotated. The shearing force is caused by the friction between the obturator and the sealing and/or between the sealing and the inner wall of the housing. The shearing may be pronounced if the flexible sealing comes in contact with the often very sharp circumferential edge of the opening.

It is also known to use the obturator as such as a sealing member. The obturator comprises a wall portion with a curvature corresponding to the curvature of the inner wall of the hollow housing and with a surface extension exceeding the cross-sectional area of the opening to be regulated. The obturator is biased in the radial direction towards the opening to be regulated by means of a spring loaded steel ball acting against a diametrically opposing inner wall portion of the housing. However, the spring load on the ball must be high in order to ensure a proper sealing. This results in a locally, very high contact pressure in the contact point between the ball and the inner wall of the housing, which over time causes wear to the the inner wall of the housing. The wear will be shown as a groove in the inner wall. Over time, the groove will result in improper sealing and hence a leakage. The only remedy will be to replace the housing and in reality the regulating valve in its entirety.

It is also well known to cure insufficient sealing by introducing a good amount of grease. This is a however not a sustainable solution since the grease will be flushed away over time by the hot medium.

Further, in many cases the regulating valve is operated on a very irregular basis and the regulation valve may often be manually operated. After a long period of non-activation, deposits, such as lime or oxide, may have been formed. Such deposits will temporarily increase the friction that must be overcome when operating the regulating valve with the risk of causing further wear to the inner wall of the housing. If the regulation valve is frequently operated, the operation is typically made by using an actuator such as a motor which will further add to the extensive frictional wear.

US1361126 A discloses a regulating valve according to the preamble of claim 1.

### SUMMARY OF THE INVENTION

It is an object of the present invention to provide an improved regulating valve of the type using the obturator as sealing member by the obturator being biased in the radial direction towards the opening to be regulated. The regulating valve should allow a high sealing force and thereby provide a low degree of inevitable leakage while at the same time presenting a reduced risk of causing wear to the inner wall of the housing.

According to a first aspect, the invention relates to a regulating valve, comprising an internally hollow housing allowing fluid communication between at least two ports of the housing, and which housing comprises a circumferential inner wall having a rotational symmetrical cylindrical extension as seen along a longitudinal centre axis, said circumferential inner wall having an opening to each port, and wherein the cross-sectional area of the opening is arranged to be regulated for controlling fluid communication through the opening; an obturator which is rotatable in relation to the opening to be regulated, said rotational axis coinciding with the longitudinal centre axis of the housing, and wherein the obturator comprises a sealing surface having a surface extension in the circumferential direction and in the axial direction, and said surface extension delimiting a sealing area exceeding the cross sectional area of the opening of the housing to be regulated, and a biasing arrangement supported by the obturator, said biasing arrangement being arranged to act between the obturator and the circumferential inner wall of the housing to thereby urge the obturator in the radial direction with regards to the longitudinal centre axis of the housing whereby the sealing surface of the obturator sealingly abuts the circumferential inner wall of the housing. The biasing arrangement comprises an elastic member and a pin, said pin having a first end portion arranged to abut the circumferential inner wall of the housing, and said first end portion having a lower wear resistance than the inner wall of the housing, and said pin being movable in the radial direction with regards to the longitudinal centre axis of the housing by the elastic member to such extent that wear of the first end portion of the pin is compensated for, whereby the first end portion of the pin may be worn down to such extent that the first end portion of the pin receives a curvature fitting the curvature of the circumferential inner wall of the housing.

The wording "wear resistance" should in the context of the invention be interpreted as defining wear that is related to the interaction between two surfaces, and especially the removal and deformation of material on a surface as a result of mechanical action of an opposite surface. The removal/deformation is the result of the interaction between two items having different surface extensions: 1) a pin having a strictly limited cross sectional area and hence presenting a strictly limited available contact area to the inner wall of the housing, and 2) the inner wall of the housing which presents a substantially larger available contact area to the pin.

The difference in available contact area presented by the two parts will cause a difference in contact wear, whereby the part presenting the smaller contact area will be worn on behalf of the other part. This applies no matter if the two parts should be made of the same materials and hence have the same hardness or if they should be made of different materials having different hardness. One example of this phenomena is the cutting-edge of a knife which in the long run will be worn even though it is used to cut a soft material.

By the present invention, a regulating valve having a prolonged working life is provided for. During the operation of the regulating valve, i.e. when the obturator is set between its different positions to selectively open or close a port, the first end of the pin will, due to its lower wear resistance gradually go towards receiving a geometry that is adapted to correspond to the curvature of the circumferential inner wall of the housing. By the pin being biased in the radial direction towards the circumferential inner wall of the housing, the sealing effect between the sealing surface of the obturator and the circumferential inner wall of the housing encircling the opening to be closed-off may be remained constant even though the pin should be worn. The elastic member will compensate for any wear by constantly pressing the pin towards the circumferential inner wall of the housing.

The biasing arrangements can be seen as a having an eccentric operation in which the biasing arrangements urge the obturator in the radial direction. As a consequence, the sealing surface of the obturator sealingly abuts the circumferential wall of the housing.

The first end of the pin will inherently already from the beginning provide a contact surface with the circumferential inner wall of the housing that exceeds the essentially point-like contact surface provided by the prior art ball. It is to be understood that during setting of the valve, the contact surface can also be seen as a contact line. The contact surface/contact line will even gradually increase as the pin is worn. Accordingly, already from the beginning the local contact pressure between the circumferential inner wall of the housing and the first end of the pin is reduced as compared to prior art. This allows a higher spring load to be used for the elastic member which in turn allows a higher contact pressure between the sealing surface of the obturator and the circumferential inner wall of the housing and thereby an overall improved sealing effect.

Further, with the inventive solution it is sufficient to replace the pin, while in prior art solutions, the only reasonable solution to remedy a worn inner wall of the housing is to replace the complete regulating valve. The reduced risk of abrasive wear prolongs the expected life length of the regulating valve.

The convex curvature of the first end portion may comprise a chamfered circumferential edge portion. The chamfering allows an easy mounting when inserting the obturator into the housing during assembling. Further, by the chamfering, the movement of the pin along the circumferential inner wall of the housing as the regulating valve is set may be facilitated since it will be more easy for the pin to accommodate any surface irregularities and also build-ups of deposits, such as lime or oxide, which may be formed during longer periods of non-activation.

The obturator comprises a radially extending channel in which the biasing arrangement is at least partly contained. The channel is a through channel and may have an end with a smaller diameter forming a longitudinal stop surface. It is to be understood that the stop surface may be formed by a plastic deformation after insertion of the biasing arrangement.

The through channel may have a tapered longitudinal extension as seen from an inlet to an outlet and a restriction portion adjacent its outlet. The tapered extension allows for an easy assembling of the components of the regulating valve by reducing the risk of any misalignment of the biasing arrangement inside the channel.

The biasing arrangement further comprises an anvil, wherein the pin is arranged to be biased towards the circumferential inner wall of the housing by the elastic member acting between a second end portion of the pin and the anvil, and wherein the longitudinal movement of the pin inside the channel is restricted by a stop surface of the pin engaging the restriction portion of the channel.

Accordingly, the pin will always be biased towards the circumferential inner wall of the housing, thereby urging the obturator in the opposite radial direction with regards to the longitudinal centre axis of the housing. As a result, the sealing surface of the obturator will sealingly abut the circumferential inner wall of the housing.

The anvil may engage the inner wall of the channel by wedging, press fitting or threading. Thereby a very easy assembling is provided for.

The obturator may be arranged to support at least two biasing arrangements distributed along the longitudinal centre axis of the housing.

The elastic member may be integrated with the pin. This may be accomplished e.g. by the pin having a local deformation zone which as such provides an elastic function and thereby allows a compression of the pin in its longitudinal direction.

It is noted that the invention relates to all possible combinations of features recited in the claims.

### BRIEF DESCRIPTION OF THE DRAWINGS

These and other aspects of the present invention will now be described in more detail, with reference to the appended drawings showing embodiments of the invention.
Fig. 1 is an exploded view of the regulating valve with its components.
Fig. 2 discloses a cross section of the obturator with the biasing arrangement mounted thereto.
Fig.3 discloses a cross section of the regulating valve.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

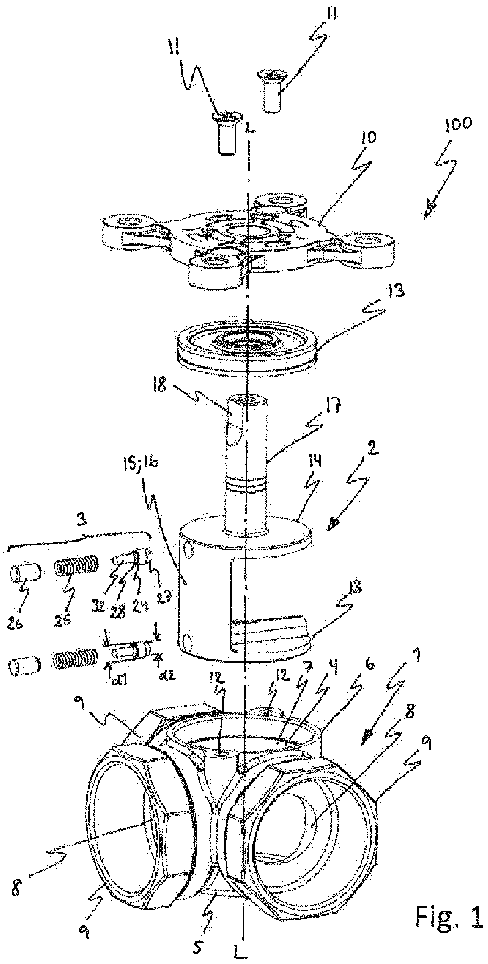

Starting with Fig. 1 an exploded view of the regulating valve 100 with its components is disclosed. In the following the regulating valve 100 will be referred to as the valve. The valve 100 comprises in principle a housing 1, an obturator 2 and a biasing arrangement 3.

The housing 1 is formed as a casted unitary body. The skilled person will understand that the housing 1 may be formed e.g. by joining two or more parts or by machining, hot stamping or injection molding. The housing 1 may be made of e.g. brass or copper but it is also to be understood that other metals, metal alloys or polymeric materials may be used.

The housing 1 comprises a valve chamber 4. The valve chamber 4 has a rotational symmetrical cylindrical extension as seen along a longitudinal centre axis L. The valve chamber 4 is defined by a bottom wall 5, an opposing open top end 6 allowing insertion of the obturator 2 and a circumferential inner wall 7 that extends between and interconnects the bottom wall 5 and the top end. The circumferential inner wall 7 may be machined at least partly. The circumferential inner wall 7 comprises in the disclosed embodiment three through openings 8. The openings 8 are adapted to form either inlets or outlets depending on how the valve is used. The number of openings 8 should be at least two, i.e. one inlet opening and one outlet opening.

The transition between the circumferential inner wall 7 and the peripheral edge of an individual opening 8 may be provided as a sharp edge or be provided with a broken edge.

The outer wall of the housing 1 is provided with ports 9. Each port 9 communicates with the valve chamber 4 via a respective opening 8. Each port 9 may be provided with a mounting means such as a threaded portion (not disclosed).

The valve 100 may be arranged to be operated by an external device (not disclosed) such as a motor. Such external device is mounted to the valve via a mounting flange 10. The mounting flange 10 may be mounted to the housing 1 by sealingly abutting the open top end 6 of the housing 1. The mounting flange 10 may be mounted to the housing 1 by way of e.g. screws 11 arranged to be received in corresponding mounting holes 12 of the housing 1.

The mounting flange 10 may be replaced and/or combined with a top element 13 forming a lid. The top element 13 may be provided with a circumferential sealing (not disclosed), such as an O-ring or the like arranged to sealingly abut and close off the open top end 6. Non-disclosed O-rings may also be used to seal against the housing 1 and the obturator 2.

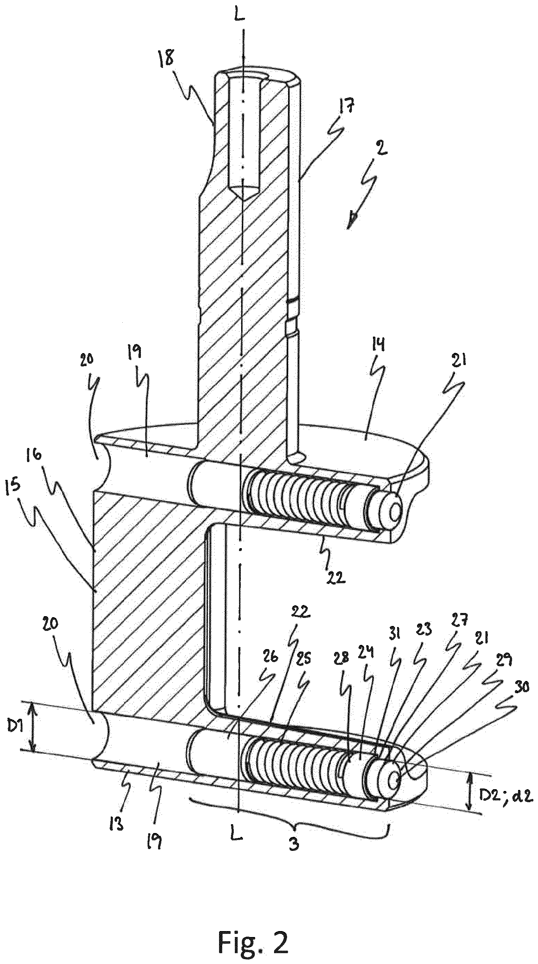

The obturator 2, also seen in Fig. 2, is preferably made by injection molding a plastic material. It is however to be understood that the obturator 2 may be made of metal. The obturator 2 has a longitudinal extension coinciding with the longitudinal center axis L of the valve 100. The obturator 2 is adapted to be received in the valve chamber 4 and to be rotated inside the valve chamber 4 around the longitudinal center axis L.

The obturator 2 comprises a bottom portion 13, a top portion 14 and a side portion 15 extending between and interconnecting the bottom portion 13 and the top portion 14. The bottom portion 13 and the top portion 14 do each have a disc shape with a radius corresponding to the radius of the circumferential inner wall 7 of the valve chamber 4. Thereby the obturator 2 will be radially supported by the circumferential inner wall 7 of the valve chamber 4 while being rotated. The same effect may be provided for by using a geometry other than a disc shape. By way of example the disc shape may be replaced by sprockets providing local supports in the radial direction.

The side portion 15 forms a sealing surface 16. The sealing surface 16 has a curved surface extension in the circumferential direction and in the longitudinal direction coinciding with the longitudinal centre axis L of the housing 1. The sealing surface 16 has a curvature, i.e. a radius corresponding to the radius of the circumferential inner wall 7 of the housing 1. The surface extension of the sealing surface 16 delimits a sealing area exceeding the cross sectional area of the opening 8 of the housing 1 to be regulated. The sealing surface 16 is substantially smooth.

The top portion 14 of the obturator 2 supports a shaft 17. The shaft 17 has an extension coinciding with the longitudinal centre axis L of the housing 1. The shaft 17 may be formed integral with the obturator 2 or be provided as a member to be mounted thereto. The shaft 17 comprises in its free end a connection portion 18 adapted to engage an external device (not disclosed) for operation of the valve, such as a motor or a knob.

The bottom portion 13 and the top portion 14 of the obturator 2 comprises a through channel 19 having an inlet opening 20 and an outlet opening 21. The inlet opening 20 is arranged on the side portion 15 of the obturator 2. In the disclosed embodiment the through channels 19 are arranged in radially extending ridges 22 arranged in the bottom portion 13 and the top portion 14. The provision of ridges 22 allows material savings.

In the disclosed embodiment at least a portion of the respective through channel 19 has a tapered longitudinal extension with a diameter D1 at the inlet opening 20 exceeding a diameter D2 at the outlet opening 21. In the disclosed embodiment a portion of the through channel 19 adjacent the inlet opening 20 has a uniform diameter.

The through channel 19 comprises a radially extending restriction portion 23 adjacent the outlet opening 21.

The through channel 19 is arranged to at least partly contain the biasing arrangement 3. The biasing arrangement 3 comprises a pin 24, an elastic member 25 and an anvil 26. The pin 24, the elastic member 25 and the anvil 26 are arranged to be inserted into the through channel 19 via the inlet opening 20, one after the other, starting with the pin 24. A first end portion 27 of the pin 24 will partly project through the outlet opening 21 of the through channel 19. The pin 24 will hence be biased in a direction towards the circumferential inner wall 7 of the housing 1 by the elastic member 25 acting between the second, opposite end 28 of the pin 24 and the anvil 26.

The pin 24 is formed as a longitudinal unitary body having a first end portion 27 and a second end portion 28. The first end portion 27, forming a front portion is adapted to face the circumferential inner wall 7 of the housing 1. The second end 28, forming a rear portion is adapted to face the elastic member 25.

The pin 24 as a whole, or at least the first end portion 27 of the pin 24 is made of a plastic material, a composite material or a metallic material. The material may be same as the material of the housing 1. One example of a suitable plastics material is PPS (polyphenylene sulfide)

The first end portion 27 of the pin 24 may be flat or as disclosed be provided with a convex curvature with a radius exceeding the radius of the circumferential inner wall 7 of the housing 1.

The first end portion 27 of the pin 24 has a diameter d2 that is slightly smaller than the diameter D2 of the outlet opening 21 of the through channel 19. Thereby the first end portion 27 of the pin 24 is allowed to at least partly project through the outlet opening 21 of the through channel 19.

A circumferential edge portion 29 of the first end portion 27 of the pin 24 may, optionally and as disclosed, be chamfered. A center portion 30 encircled by such chamfered circumferential edge portion 29 may be flat or have a radius exceeding the radius of the circumferential inner wall 7 of the housing 1.

The second end portion 28 of the pin 24 has a diameter d1 slightly larger than the diameter D2 of the outlet opening 21 of the through channel 19. The radial transition between the first and the second portions 27, 28 of the pin 24 forms a stop surface 31. The longitudinal displacement of the pin 24 inside the through channel 19 will thereby be restricted by the stop surface 31 engaging the restriction portion 23 of the through channel 19.

The second end portion 28 of the pin 24 comprises an optional longitudinal projection 32 to be inserted into the elastic member 25.

The elastic member 25 is formed by a coil spring. The elastic member 25 is arranged to encircle the projection 32 of the pin 24 and also abut the second end portion 28 of the pin 24. The opposite end of the elastic member 25 is arranged to abut the anvil 26.

The anvil 26 is arranged as a plug to be inserted into and lockingly engage the inner wall 7 of the through channel 19. Thereby the pin 24 will be biased in the radial direction of the obturator 2 towards the circumferential inner wall 7 of the housing 1.

The anvil 26 may be formed by any rigid material such as a plastics material, a composite material or a metallic material. The anvil 26 may be arranged to lockingly engage the inner wall 7 of the through channel 19 by e.g. wedging, press fitting or even threading.

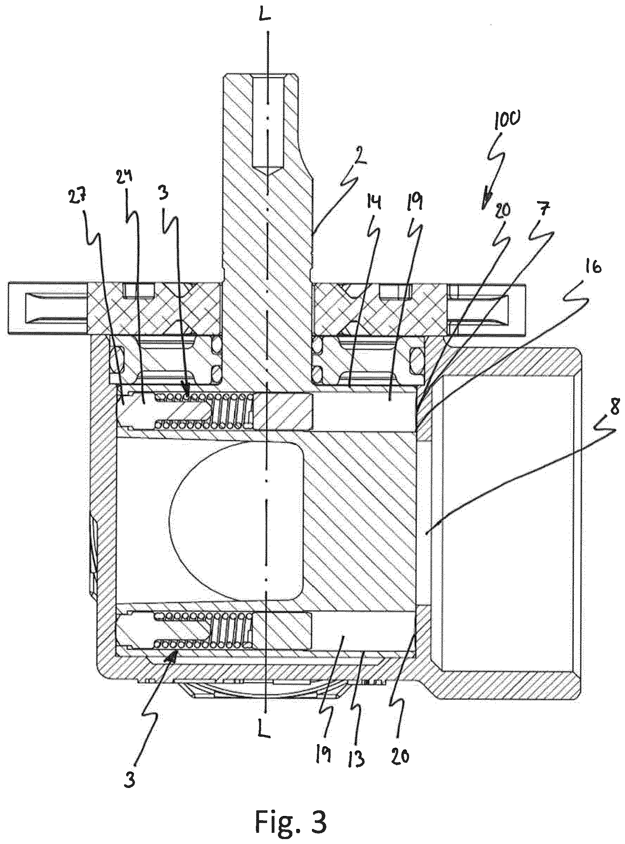

Now turning to Fig. 3, a longitudinal cross section of the regulating valve 100 is disclosed. The obturator 2 is set to a position in which the sealing surface 16 extends across and thereby closes off one opening 8 in the circumferential inner wall 7 of the housing 1.

The disclosed obturator 2 comprises two biasing arrangements 3: one biasing arrangement 3 arranged in the through channel 19 extending through the top portion 14 of the obturator 2 and one biasing arrangement 3 arranged in the through channel 19 extending in the bottom portion 13 of the obturator 2. Accordingly, the through channels 19 are linearly distributed along the longitudinal centre axis L of the housing 1. Also, the through channels 19 are displaced along the longitudinal centre axis L of the housing 1 to a position in which the respective inlet openings 20 of the through channels 19 are closed off by the circumferential inner wall 7 of the housing 1. Thereby, the fluid flow that is intended to be controlled by the regulating valve 100 is prevented from entering the through channels 19.

The biasing arrangements 3 can be seen as a having an eccentric operation in which the biasing arrangements 3 urge the obturator 2 in the radial direction. More precisely, the first end portion 27 of the pin 24 is forced by the elastic member 25 to abut the circumferential inner wall 7 of the housing 1. Thereby the biasing arrangements 3 urge the obturator 2 in the opposite radial direction with regards to the longitudinal centre axis L of the housing 1. As a result, the sealing surface 16 of the obturator 2 sealingly abuts the circumferential inner wall 7 of the housing 1 and thereby closes off the opening 8.

When the obturator 2 is set between its different positions to selectively regulate the area of an opening 8 and thereby the flow, the first end of the pin 24 will, due to its lower wear resistance gradually go towards receiving a geometry that is adapted to correspond to the curvature of the circumferential inner wall 7 of the housing 1. By the pin 24 being biased in the radial direction towards the circumferential inner wall 7 of the housing 1, the sealing effect between the sealing surface 16 of the obturator 2 and the circumferential inner wall 7 of the housing 1 encircling the opening 8 to be closed-off may be remained constant even though the pin 24 should be worn. The elastic member 25 will compensate for any wear by constantly pressing the pin 24 towards the circumferential inner wall 7 of the housing 1.

The first end portion 27 of the pin 24 will inherently already from the beginning provide a contact surface with the circumferential inner wall 7 of the housing 1 that exceeds the essentially point-like contact surface provided by the prior art ball. It is to be understood that during setting of the valve, the contact surface can also be seen as a contact line. The contact surface/contact line will even gradually increase as the pin is worn.

Variations to the disclosed embodiments can be understood and effected by the skilled person in practicing the claimed invention, from a study of the drawings, the disclosure, and the appended claims.

The through channels 19 have been described as being tapered. It is to be understood that the through channels 19 instead may have a uniform diameter. Also, the channel may have an end with a smaller diameter forming a longitudinal stop surface. The stop surface may be formed by a plastic deformation after insertion of the biasing arrangement.

The elastic member 27 has been disclosed as a coil spring. It is to be understood that the elastic member with remained function may be integrated with the pin. This may be accomplished e.g. by the pin having a local deformation zone which as such provides an elastic function and thereby allows a compression of the pin in its longitudinal direction.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A regulating valve (100), comprising an internally hollow housing (1) allowing fluid communication between at least two ports (9) of the housing (1), and which housing (1) comprises a circumferential inner wall (7) having a rotational symmetrical cylindrical extension as seen along a longitudinal centre axis (L), said circumferential inner wall (7) having an opening (8) to each port (9), and wherein the cross-sectional area of the opening (8) is arranged to be regulated for controlling fluid communication through the opening (8);
an obturator (2) which is rotatable in relation to the opening (8) to be regulated, said rotational axis coinciding with the longitudinal centre axis (L) of the housing (1), and wherein the obturator (2) comprises a sealing surface (16) having a surface extension in the circumferential direction and in the axial direction, and said surface extension delimiting a sealing area exceeding the cross sectional area of the opening (8) of the housing (1) to be regulated,
and a biasing arrangement (3) supported by the obturator (2), said biasing arrangement (3) comprising an elastic member (25) and a pin (24) and being arranged to act between the obturator (2) and the circumferential inner wall (7) of the housing (1) to thereby urge the obturator (2) in the radial direction with regards to the longitudinal centre axis (L) of the housing (1) whereby the sealing surface (16) of the obturator (2) sealingly abuts the circumferential inner wall (7) of the housing (1),
**characterized in that**
the elastic member (25) and the pin (24) are at least partly contained in a radially extending through going channel (19) of the obturator (2), said through going channel (19) comprising a radially extending restriction portion (23) adjacent an outlet opening (21) thereof, and wherein the pin (24) is configured to be biased in a direction toward the circumferential inner wall (7) of the housing (1) by the elastic member (25) which is configured to act between an anvil (26) inserted to the through going channel (19) and the pin (24),
said pin (24) having a first end portion (27) arranged to abut the circumferential inner wall (7) of the housing (1), and said first end portion (27) having a lower wear resistance than the inner wall (7) of the housing (1), and
said pin (24) being movable in the radial direction with regards to the longitudinal centre axis (L) of the housing (1) by the elastic member (25) to such extent that wear of the first end portion (27) of the pin (24) is compensated for, whereby the first end portion (27) of the pin (24) may be worn down to such extent that the first end portion (27) of the pin (24) receives a curvature fitting the curvature of the circumferential inner wall (7) of the housing (1).

2. Regulating valve according to claim 1, wherein the first end portion (27) of the pin (24) comprises a chamfered circumferential edge portion (29).

3. Regulating valve according to claim 1, wherein the through channel (19) has a tapered longitudinal extension as seen from an inlet opening (20) to the outlet opening (21).

4. Regulating valve according to claim 1, wherein the longitudinal movement of the pin (24) inside the channel (19) is restricted by a stop surface (31) of the pin (24) engaging the restriction portion (23) of the channel (19).

5. Regulating valve according to claim 1, wherein the anvil (26) engages the inner wall of the through channel (19) by wedging, press fitting or threading.

6. Regulating valve according to any the preceding claims, wherein the obturator (2) is arranged to support at least two biasing arrangements (3) distributed along the longitudinal centre axis (L) of the housing (1).

7. Regulating valve according to any of the preceding claims, in which the elastic member (27) is integrated with the pin (24).

## Patentansprüche

1. Regelventil (100), umfassend ein im Inneren hohles Gehäuse (1), das eine Fluidverbindung zwischen mindestens zwei Anschlüssen (9) des Gehäuses (1) ermöglicht und wobei das Gehäuse (1) eine umlaufende Innenwand (7) umfasst, die eine rotationssymmetrische zylindrische Verlängerung aufweist, wie sie entlang einer Längsmittelachse (L) zu sehen ist, wobei die umlaufende Innenwand (7) eine Öffnung (8) zu jedem Anschluss (9) aufweist, und wobei die Querschnittsfläche der Öffnung (8) angeordnet ist, dass sie geregelt werden kann, um die Fluidkommunikation durch die Öffnung (8) zu steuern;
einen Obturator (2), der in Bezug auf die Öffnung (8) drehbar ist, dass er geregelt werden kann, wobei die Drehachse mit der Längsmittelachse (L) des Gehäuses (1) zusammenfällt, und wobei der Obturator (2) eine Dichtfläche (16) umfasst, die eine Flächenverlängerung in der Umfangsrichtung und in der axialen Richtung aufweist, und wobei die Flächenverlängerung eine Dichtfläche begrenzt, die die Querschnittsfläche der Öffnung (8) des zu regelnden Gehäuses (1) überschreitet, und
eine Vorspannanordnung (3), die vom Obturator (2) getragen wird, wobei die Vorspannanordnung (3) ein elastisches Element (25) und einen Stift (24) umfasst und angeordnet ist, um zwischen dem Obturator (2) und der umlaufenden Innenwand (7) des Gehäuses (1) zu wirken, um dadurch den Obturator (2) in radialer Richtung in Bezug auf die Längsmittelachse (L) des Gehäuses (1) zu drücken, wobei die Dichtfläche (16) des Obturators (2) dichtend an der umlaufenden Innenwand (7) des Gehäuses (1) anliegt, **dadurch gekennzeichnet, dass**
das elastische Element (25) und der Stift (24) mindestens teilweise in einem radial verlaufenden Durchgangskanal (19) des Obturators (2) enthalten sind, wobei der Durchgangskanal (19) einen sich radial erstreckenden Begrenzungsabschnitt (23) benachbart zu einer Auslassöffnung (21) davon umfasst, und wobei der Stift (24) konfiguriert ist, um in Richtung der umlaufenden Innenwand (7) des Gehäuses (1) durch das elastische Element (25) vorgespannt zu werden, das konfiguriert ist, um zwischen einem Amboss (26), der in den Durchgangskanal (19) eingesetzt ist, und dem Stift (24) zu wirken,
wobei der Stift (24) einen ersten Endabschnitt (27) aufweist, der so angeordnet ist, dass er an der umlaufenden Innenwand (7) des Gehäuses (1) anliegt, und der erste Endabschnitt (27) eine geringere Verschleißfestigkeit als die Innenwand (7) des Gehäuses (1) aufweist, und
wobei der Stift (24) in Bezug auf die Längsmittelachse (L) des Gehäuses (1) durch das elastische Element (25) in einem solchen Ausmaß in der radialen Richtung bewegbar ist, dass der Verschleiß des ersten Endabschnitts (27) des Stifts (24) kompensiert wird, wodurch der erste Endabschnitt (27) des Stifts (24) in einem solchen Ausmaß abgenutzt werden kann, dass der erste Endabschnitt (27) des Stifts (24) eine Krümmung erhält, die der Krümmung der umlaufenden Innenwand (7) des Gehäuse (1) entspricht.

2. Regelventil nach Anspruch 1, wobei der erste Endabschnitt (27) des Stiftes (24) einen abgeschrägten Umfangsrandabschnitt (29) umfasst.

3. Regelventil nach Anspruch 1, wobei der Durchgangskanal (19) eine von einer Einlassöffnung (20) zur Auslassöffnung (21) gesehene verjüngende Längserstreckung aufweist.

4. Regelventil nach Anspruch 1, wobei die Längsbewegung des Stiftes (24) innerhalb des Kanals (19) durch eine Anschlagfläche (31) des Stiftes (24), der in den Begrenzungsabschnitt (23) des Kanals (19) eingreift, begrenzt ist.

5. Regelventil nach Anspruch 1, wobei der Amboss (26) in die Innenwand des Durchgangskanals (19) durch Verkeilen, Presspassung oder Verschraubung eingreift.

6. Regelventil nach einem der vorhergehenden Ansprüche, wobei der Obturator (2) angeordnet ist, um mindestens zwei Vorspannanordnungen (3), die entlang der Längsmittelachse (L) des Gehäuses (1) verteilt sind, zu tragen.

7. Regelventil nach einem der vorhergehenden Ansprüche, bei dem das elastische Element (27) in den Stift (24) integriert ist.

## Revendications

1. Soupape de régulation (100) comprenant un boîtier creux de manière interne (1) permettant une communication fluidique entre au moins deux orifices (9) du boîtier (1), et lequel boîtier (1) comprend une paroi intérieure circonférentielle (7) ayant une extension cylindrique à symétrie de rotation en vue le long d'un axe central longitudinal (L), ladite paroi intérieure circonférentielle (7) ayant une ouverture (8) sur chaque orifice (9), et dans laquelle la superficie en section transversale de l'ouverture (8) est étudiée pour être régulée pour contrôler une communication fluidique à travers l'ouverture (8) ;
un obturateur (2) qui est rotatif par rapport à l'ouverture (8) à réguler, ledit axe rotatif coïncidant avec l'axe central longitudinal (L) du boîtier (1), et dans laquelle l'obturateur (2) comprend une surface d'étanchéité (16) ayant une surface d'extension dans la direction circonférentielle et dans la direction axiale, et ladite surface d'extension délimitant une zone d'étanchéité dépassant la superficie en section transversale de l'ouverture (8) du boîtier (1) à réguler,
et un agencement de sollicitation (3) supporté par l'obturateur (2), ledit agencement de sollicitation (3) comprenant un élément élastique (25) et une broche (24) et étant étudié pour agir entre l'obturateur (2) et la paroi intérieure circonférentielle (7) du boîtier (1) afin de pousser ainsi l'obturateur (2) dans la direction radiale par rapport à l'axe central longitudinal (L) du boîtier (1) moyennant quoi la surface d'étanchéité (16) de l'obturateur (2) bute de manière étanche contre la paroi intérieure circonférentielle (7) du boîtier (1), **caractérisée en ce que**
l'élément élastique (25) et la broche (24) sont au moins partiellement contenus dans un canal traversant (19) s'étendant radialement de l'obturateur (2), ledit canal traversant (19) comprenant une partie de restriction s'étendant radialement (23) adjacente à une ouverture de sortie (21) de celui-ci, et dans laquelle la broche (24) est configurée pour être sollicitée dans une direction vers la paroi intérieure circonférentielle (7) du boîtier (1) grâce à l'élément élastique (25) qui est configuré pour agir entre une butée (26) insérée dans le canal traversant (19) et la broche (24),
ladite broche (24) ayant une première partie d'extrémité (27) étudiée pour buter contre la paroi intérieure circonférentielle (7) du boîtier (1), et ladite première partie d'extrémité (27) ayant une plus faible résistance à l'usure que la paroi intérieure (7) du boîtier (1), et
ladite broche (24) étant mobile dans la direction radiale par rapport à l'axe central longitudinal (L) du boîtier (1) grâce à l'élément élastique (25) au point que l'usure de la première partie d'extrémité (27) de la broche (24) est compensée, moyennant quoi la première partie d'extrémité (27) de la broche (24) peut être usée au point que la première partie d'extrémité (27) de la broche (24) reçoit une courbure épousant la courbure de la paroi intérieure circonférentielle (7) du boîtier (1).

2. Soupape de régulation selon la revendication 1, dans laquelle la première partie d'extrémité (27) de la broche (24) comprend une partie de bord circonférentielle chanfreinée (29).

3. Soupape de régulation selon la revendication 1, dans laquelle le canal traversant (19) a une extension longitudinale effilée en vue depuis une ouverture d'entrée (20) jusque vers l'ouverture de sortie (21).

4. Soupape de régulation selon la revendication 1, dans laquelle le mouvement longitudinal de la broche (24) à l'intérieur du canal (19) est restreint par une surface d'arrêt (31) de la broche (24) se mettant en prise avec la partie de restriction (23) du canal (19).

5. Soupape de régulation selon la revendication 1, dans laquelle la butée (26) se met en prise avec la paroi intérieure du canal traversant (19) par calage, ajustement serré, ou filetage.

6. Soupape de régulation selon l'une quelconque des revendications précédentes, dans laquelle l'obturateur (2) est étudié pour supporter au moins deux agencements de sollicitation (3) répartis le long de l'axe central longitudinal (L) du boîtier (1).

7. Soupape de régulation selon l'une quelconque des revendications précédentes, dans laquelle l'élément élastique (27) est intégré avec la broche (24).
